# EUROPÄISCHE PATENTSCHRIFT

(11) **EP 0 667 975 B1**
(45) Veröffentlichungstag und Bekanntmachung des Hinweises auf die Patenterteilung: **19.02.1997**
(21) Anmeldenummer: 93924017.2
(22) Anmeldetag: 30.10.1993
(51) Int. Cl.: G09F 9/37, G02B 26/08

(54) **HOCHAUFLÖSENDES DISPLAY**
HIGH-RESOLUTION DISPLAY
ECRAN DE VISUALISATION A HAUTE RESOLUTION

(30) Priorität: 05.11.1992 DE 4237296
(43) Veröffentlichungstag der Anmeldung: 23.08.1995
(73) Patentinhaber: HAHN-SCHICKARD-GESELLSCHAFT FÜR ANGEWANDTE FORSCHUNG E.V., D-78052 Villingen-Schwenningen (DE)
(72) Erfinder: KULCKE, Werner, D-71032 Böblingen (DE); SCHMIDT, Bertram, D-78056 Villingen-Schwenningen (DE)
(74) Vertreter: Patentanwälte Westphal, Buchner, Mussgnug Neunert, Göhring
(86) Internationale Anmeldenummer: DE9301050
(87) Internationale Veröffentlichungsnummer: WO9410669

(56) Entgegenhaltungen:
- EP-A- 0 143 079
- WO-A-86/01626
- GB-A- 2 071 896
- US-A- 4 596 992

## Beschreibung

Die Erfindung betrifft ein hochauflösendes Display nach dem Oberbegriff des Anspruchs 1.

Dieses Display ist für mit reflektiertem bzw. transmittiertem Licht arbeitende Systeme geeignet.

Kathodenstrahlröhren (Cathode Ray Tubes - CRTs) finden breiteste Anwendung als Bildschirmeinheit in Fernsehgeräten. In ihnen wird ein fokussierter Elektronenstrahl zeilenweise über die mit Phosphor belegte Frontscheibe geführt. Dabei leuchtet der Phosphor je nach Strahlstrom des Elektronenstrahls mehr oder weniger hell auf. Das Fernsehbild wird aus bis zu etwa einer Million einzeln angesteuerten Bildpunkten zusammengesetzt.

Ein entscheidendes Merkmal dieser Kathodenstrahlröhren ist das Nachleuchten des Phosphors. Dieser hält die Lichtstärke der Bildpunkte über die Zeit hinweg etwa konstant, während der Strahl die übrigen Bildpunkte ansteuert. Das Nachleuchten unterdrückt weitgehend das sonst auftretende Flimmern des Bildschirms.

Ein großer Nachteil von Kathodenstrahlröhren ist, daß die Helligkeit des Bildes durch die maximale Leuchtdichte des Phosphors begrenzt ist. Kathodenstrahlröhren können daher nur bei abgedunkeltem Tageslicht, aber nicht im Freien verwendet werden. Ein größerer Nachteil ist die große Bautiefe, die zur Steuerung des Elektronenstrahls erforderlich ist. Wegen dieses Nachteils können Kathodenstrahlröhren bei vielen modernen Geräten, wie z.B. einem Laptop-Computer, nicht angewendet werden.

In neuerer Zeit finden immer mehr Anzeigen mit Flüssigkristallen (LCD-Displays) Verwendung. Bei diesen LCD-Displays sind ungeordnete flüssige Kristalle zwischen gekreuzten Polarisatoren angebracht, die durch Anlegen eines elektrischen Feldes ausgerichtet werden können. Dadurch wird die Polarisationsrichtung des durchgehenden Lichtes beeinflußt, so daß ein zwischen gekreuzten Polarisatoren dunkles Bildfeld hell bzw. ein zwischen parallelen Polarisatoren helles Bildfeld dunkel gesteuert werden kann.

LCD-Displays können für die Anzeige im reflektierten und im transmittierten Licht konstruiert werden. Im Reflexionsmodus für Schwarz-Weiß-Anzeige sind sie nur wenige Millimeter dick. Sie finden in dieser Form breite Anwendung bei Quarzuhren, Taschenrechnern und neuerdings auch bei Laptop-Computern. Da die Reflexion jeweils der Umgebungshelligkeit angepaßt ist, können diese Displays unter beliebigen Helligkeitsbedingungen verwendet werden.

Farbige LCD-Displays können nur mit transmittiertem Licht betrieben werden. Die Notwendigkeit der Verwendung von Polarisatoren und die Zerlegung des Lichtes in die drei Farbkomponenten reduzieren den Pegel des reflektierten Lichtes auf weniger als 8 % und verhindern so die Beobachtung im reflektierten Licht. Selbst ideale Polarisatoren absorbieren 50 % des einfallenden unpolarisierten Lichtes. Reale Polarisatoren absorbieren zusätzlich vom Licht der richtigen Polarisation noch etwa 25 %. Folglich ist beim zweimaligen Durchgang des Lichtes durch die Polarisatoren mit Lichtverlusten von insgesamt etwa 75 % zu rechnen. Die verbleibenden 25 % des einfallenden Lichtes werden bei Farb-Displays durch die lateral aufgeteilte Zerlegung in die Rot-Grün-Blau-Anteile mittels kleiner Lochblenden nochmals um mindestens 70 % auf damit weniger als 8 % des einfallenden Lichtes reduziert.

Im Transmissionsmodus ist eine Hintergrundbeleuchtung erforderlich, die eine Bautiefe von einigen Zentimetern notwendig macht und einen beträchtlichen Verbrauch an elektrischer Energie verursacht. Beide Eigenschaften stellen erhebliche Nachteile für die Verwendung in tragbaren Geräten dar.

Zur Vermeidung dieser Nachteile sind in der Vergangenheit anstelle von LCD-Displays mikromechanische Anordnungen vorgeschlagen worden. Bei diesen sind kleine quadratische Klappen in eine 5 µm dünne SiO₂-Membran eingearbeitet, die jeweils an einer ihrer Ecken mit der Membran verbunden sind. Mittels eines Elektronenstrahls können diese Klappen aufgeladen und in einem elektrischen Feld leicht aus ihrer Ruhelage ausgelenkt werden. Über eine Schlieren-Optik kann das dort erzeugte Bild sichtbar gemacht werden.

Bei einer anderen, für optische schwarz-weiß Displays entwickelten mikromechanischen Anordnung werden Mikrolamellen unter Wirkung eines elektrischen Feldes um ihre zweiseitigen Aufhängungen verdreht.

Auch aus DE 31 08 240 C2 ist eine mikromechanische Anordnung bekannt, bei welcher verdrehbare Klappen über Torsionsstege in einer das Display bildenden Membran aufgehängt sind.

Alle genannten mikromechanischen Anordnungen haben den Nachteil, daß die Aufhängungselemente der Klappen relativ groß sind bzw. die seitlich von den Klappen abstehenden Stege platzraubend sind, so daß für die Anzeigeelemente vergleichsweise viel Platz verlorengeht. Eine dichte Anordnung der Drehklappen ist damit unmöglich, wodurch eine Verwendung dieser Anordnungen für lichtstarke Displays ausgeschlossen ist.

Außerdem sind die in der Regel kurz bemessenen Aufhängungselemente bei Verdrehung sehr bruchgefährdet.

Der vorliegenden Erfindung liegt die Aufgabe zugrunde, ausgehend von einem Display der aus DE 31 08 240 C2 bekannten und im Oberbegriff des Anspruchs 1 angegebenen Art den Aufbau der Drehklappen so zu verbessern, daß diese dichter angeordnet werden können und damit ein lichtstärkeres Display realisiert werden kann.

Gelöst wird diese Aufgabe gemäß vorliegender Erfindung durch die in Anspruch 1 angegebenen Merkmale. Vorteilhafte Ausführungsbeispiele sind in den Unteransprüchen angegeben.

Der wesentliche Erfindungsgedanke besteht darin, daß die beiden Flügel der Drehklappen nur über einen verjüngten Verbindungssteg miteinander und mit den in der Drehachse zwischen den Flügeln gelegenen Torsionsstegen verbunden sind. Hierdurch wird erreicht, daß vergleichsweise lang bemessene Torsionsstege nur geringfügig über die Drehklappen hinausragen, also wenig Platz in Anspruch nehmen und dennoch eine die Bruchgefährdung erheblich herabsetzende Länge aufweisen.

Nachfolgend wird die Erfindung anhand eines in der Zeichnung dargestellten Ausführungsbeispieles näher erläutert. Es zeigen :
- Figur 1a: Aufsicht auf eine vergrößert dargestellte Drehklappe eines erfindungsgemäßen Displays,
- Figur 1b: Schnitt entlang der Linie A-A' gemäß Figur 1a mit einer hinter der Drehklappe angeordneten Farbfläche,
- Figur 2a: Aufsicht auf ein vergrößert dargestelltes erfindungsgemäßes Display mit einer geschlossenen und einer teilweise geöffneten Drehklappe,
- Figur 2b: Schnitt entlang der Linie A-A' gemäß Figur 2a mit hinter den Drehklappen angeordneten Farbflächen,
- Figur 3: Aufsicht auf das erfindungsgemäße Display mit mehreren nebeneinander angeordnete Drehklappen und
- Figur 4: Aufsicht auf eine vergrößert dargestellte asymmetrische Drehklappe des erfindungsgemäßen Displays nach einem anderen Ausführungsbeispiel.

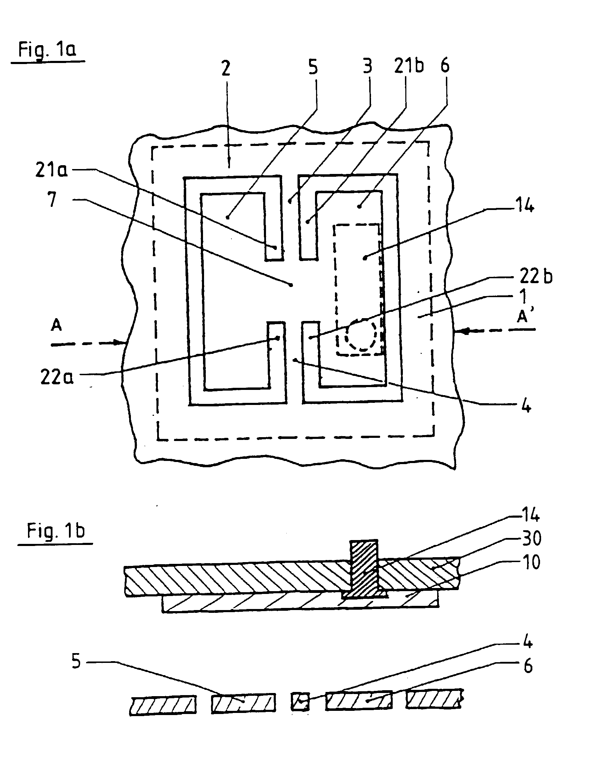

In Figur 1a ist eine Drehklappe 2 eines erfindungsgemäßen Displays dargestellt, welche aus zwei rechteckförmigen flachen Flügeln 5 und 6 besteht, die durch einen Verbindungssteg 7 an ihren Längsseiten miteinander und über Torsionsstege 3 und 4 mit der Membran 1 verbunden sind. Die beiden Flügel 5 und 6 bilden zusammen mit Verbindungssteg 7 und den Torsionsstegen 3 bzw. 4 je zwei obere L-förmige Ausnehmungen 21a/b bzw. zwei untere L-förmige Ausnehmungen 22a/b. Die Torsionsstege 3, 4 stellen die Drehverbindung zwischen der Membran 1 und dem Verbindungssteg 7 dar. Der gesamte Zwischenraum zwischen den Flügeln 5 bzw. 6 und der Membran 1 hat die Form eines unterbrochenen rechteckförmigen Rahmens. Die Zwischenräume zwischen den Flügeln 5 und 6 und der Membran 1 bzw. den Torsionsstegen 3 und 4 werden durch reaktives Ionenätzen in eine ca. 1 µm dünne Siliziummembran 1 eingearbeitet. Die gesamte Anordnung einer Drehklappe 2, die im wesentlichen aus den beiden Flügeln 5 und 6 besteht, ist symmetrisch zur Mittellinie der Torsionsstege 3 und 4 sowie zu der dazu senkrecht verlaufenden Mittellinie des Verbindungssteges 7. Die Drehklappe 2 ist um die erste Symmetrieachse, die gleichzeitig die Torsionsdrehachse bildet, verdrehbar. In Figur 1b ist ein vergrößerter Schnitt entlang der Linie A-A' in Figur la dargestellt. Hinter der Drehklappe 2 ist auf einer Trägerwand 30 eine Farbfläche 10 angebracht. Zwischen Trägerwand 30 und Farbfläche 10 ist eine Elektrode 14 eingelassen. Die Elektrode 14 steht direkt gegenüber dem Flügeln 6. Die Elektrode 14 wird über einen nicht dargestellten Dünnschicht-Transistor angesteuert. Dadurch wirkt eine elektrische Kraft auf den Flügel 6. Als Folge davon werden die Flügel 5 und 6 um die gemeinsame Achse der Torsionsstege 3 und 4 gedreht. Die Höhe des Ansteuersignals bestimmt den Verdrehwinkel.

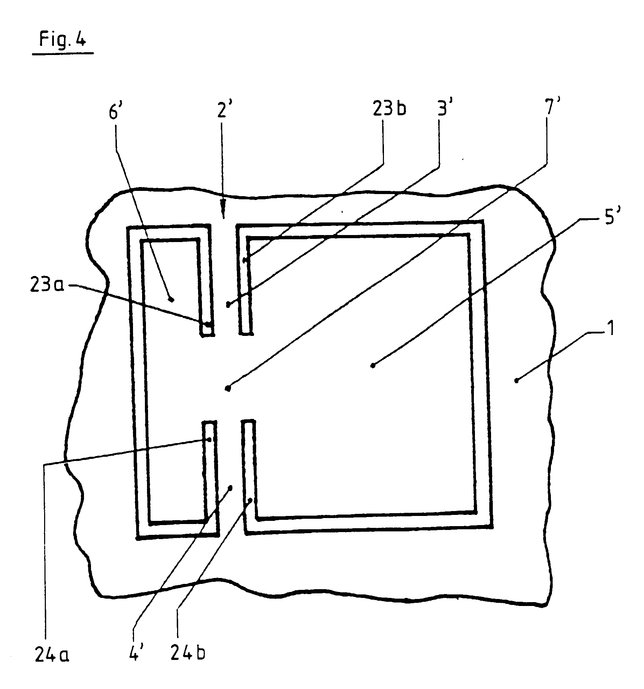

In Figur 4 ist eine Drehklappe 2' dargestellt, die nur noch bezüglich der Mittellinie des Verbindungssteges 7'symmetrisch ist. Die Ausnehmungen 23a und 23b und die gegenüberliegenden Ausnehmungen 24a und 24b sind zusammen mit den Torsionsstegen 3' bzw. 4' nicht mehr mittig angeordnet. Die rechteckförmigen Flügel 5', 6' sind deshalb in ihrer Größe unterschiedlich. Auf diese Weise läßt sich das auf die Drehklappe 2' wirkende Drehmoment derart ändern, daß sich eine eindeutige Vorzugsdrehrichtung ergibt. Außerdem wird hierdurch die Störempfindlichkeit bei der Ansteuerung von Nachbarklappen verringert.

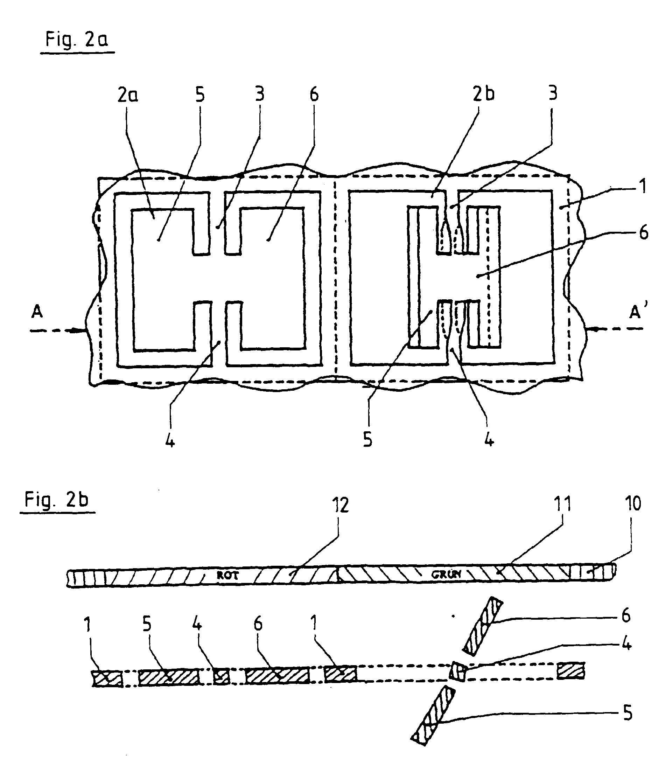

In Figur 2a sind zwei nebeneinanderliegende Drehklappen 2a,b dargestellt. Die Drehklappe 2a ist geschlossen, die Drehklappe 2b ist teilweise geöffnet.

Figur 2b zeigt einen Schnitt entlang der Linie A-A' der Figur 2a. Die rechte Drehklappe 2b ist um ca. 70° aus ihrer Ruhelage verdreht. Bei Aufsicht auf die Membran 1 gibt die um ca. 70° verdrehte Drehklappe 2b den Blick auf den grünen Teil 11 der dahinterliegenden Farbfläche 10 frei. Die Oberflächen der Membran 1 und der Drehklappen 2 sind lichtabsorbierend geschwärzt ausgeführt. Die Drehklappen 2 können durch die nicht dargestellten hinter der Farbfläche 10 befindlichen Elektroden der für die Ansteuerung vorgesehenen Dünnschicht-Transistoren angesteuert werden. Dabei bestimmt die Höhe der Ansteuerspannung die Verdrehung der Drehklappe und damit die Helligkeit des angesteuerten Bildpunktes.

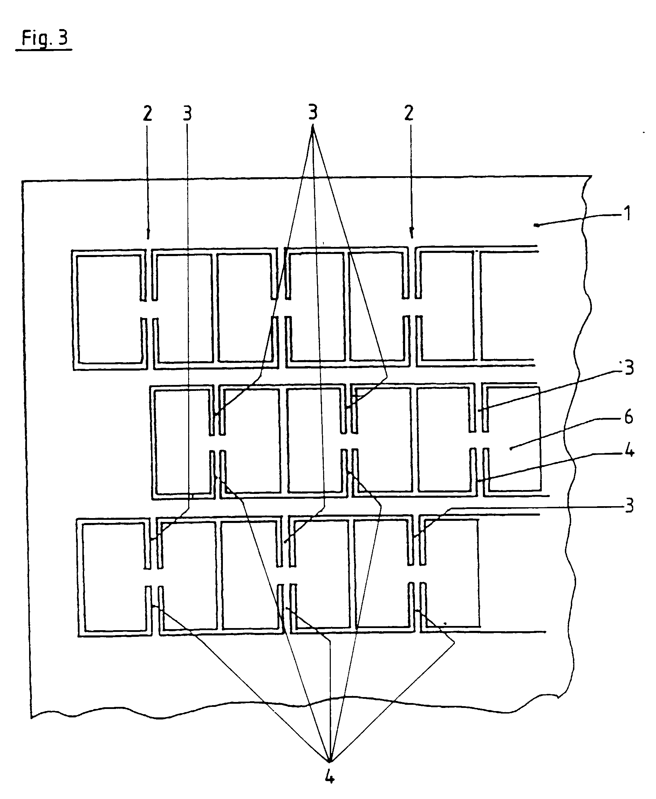

Figur 3 zeigt einen Teilbereich einer Membran mit mehreren nebeneinander und übereinander angeordneten Drehklappen 2. Wie erkennbar ist, sind die einzelnen Drehklappen 2 sehr eng benachbart. Dies ist nur dadurch möglich, daß der wesentliche Teil der Torsionsstege 3 bzw. 4 zwischen den beidseitigen Flügeln 5 und 6 innerhalb der äußeren Umfangslinie einer Drehklappe 2 verläuft und nur wenig über diese, nämlich um den Abstand der benachbarten Ränder der Flügel und der Membranaussparung, hinausragt.

Für ein Schwarz-Weiß-Display sind die hinter den Drehklappen gelegenen Farbflächen 10 weiß ausgeführt. Die Oberfläche der Membran 1 und der Drehklappen 2 ist lichtabsorbierend geschwärzt ausgeführt. Bei dichter Anordnung der Drehklappen 2 kann dabei jeder Bildpunkt im reflektierten Licht zwischen 100 %ig reflektierend weiß und 100 %ig absorbierend schwarz, über den Öffnungsgrad der entsprechenden Klappe, geschaltet werden. Es besteht natürlich auch die Möglichkeit, die Farbfläche 10 schwarz und die Membran mit den Drehklappen weiß auszuführen.

Für ein Farb-Display sind für jeden Bildpunkt ein grünes 11, ein rotes 12 und ein blaues 13 Farbelement vorgesehen, das jedes für sich im reflektierten Licht zwischen 100 %ig reflektierend und 100 %ig absorbierend geschaltet werden kann. Damit sind die bei Farb-LCDs auftretenden Lichtverluste eliminiert, weil jede Grundfarbe nur in einer der drei Farbflächen eines Bildpunktes reflektiert wird. Auch bei einem Farbdisplay besteht die Möglichkeit, die Farbfläche 10 schwarz (absorbierend) auszuführen und die Farben Grün, Rot und Blau auf den Drehklappen anzubringen. Diese Anordnung hat den Vorteil einer besonders geringen Winkelabhängigkeit der Anzeigehelligkeit.

Zur weiteren Helligkeitssteigerung können die Farbflächen 10 mit Lumineszenzfarben hergestellt sein, die die kürzerwelligen Anteile des Beleuchtungslichtes in Farblicht verwandeln und dieses zusätzlich zu dem reflektierten Licht ausstrahlen.

Eine weitere Helligkeitssteigerung kann dadurch erzielt werden, daß die Farbflächen als teilweise transparente Filter ausgeführt und diese zusätzlich von weißem Hintergrundlicht beleuchtet werden. Da dieses Hintergrundlicht nur bei sehr schwacher Raumhelligkeit benötigt wird, kann es von geringer Helligkeit sein. Bei dessen Erzeugung durch eine Elektrolumineszenzplatte kann die Bautiefe des Farb-Displays klein gehalten werden.

Werden die Farbflächen 10 mit transparenten Farbfiltern bestückt, dann kann das Display auch zur Erzeugung farbiger Durchlichtbilder verwendet werden.

Eine große Vielzahl von Anwendungen ergibt sich bereits dann, wenn die Farbfilter aus farblos transparentem Material ausgeführt sind. Je nach Pixel-Größe kann das hochauflösende Display dann zur Erzeugung transparenter Bildmasken (z. B. für die normale Photographie oder die Röntgenstrahl-Exposition), als Fernsehbrille bei intermittierender 3D-Kodierung, als sehr schneller elektronischer Verschluß oder als sehr schnelle Blende in Kameras, als Lichtmodulator oder -verschluß in der optischen Datenübertragung oder als steuerbares optisches Spatialfilter verwendet werden.

Die Torsionsstege 3, 4 bestehen wie die Drehklappen 2 aus Silizium und sind dementsprechend außerordentlich bruchsicher. Ihre Breite und Länge kann so auf die Dimensionen der Drehklappen abgestimmt werden, daß die Trägheit der Verdrehung zur Unterdrückung des Flimmerns der Anzeige genutzt wird. Die Membran kann von einer dichten Ummantelung umgeben sein, innerhalb derer sich ein Gas befindet. Durch die Dichte des die Drehklappen umgebenden Gases kann ebenfalls die Trägheit beeinflußt werden. Außer Gasen können auch Flüssigkeiten verwendet werden.

Auch die Zeitkonstante der Ansteuerelektronik kann auf die Trägheit der Klappen abgestimmt werden, um ein Flimmern der Anzeige zu unterdrücken.

### FIGURENLEGENDE

- 1: Membran
- 2: Drehklappe
- 3: Torsionssteg
- 4: Torsionssteg
- 5: Flügel
- 6: Flügel
- 7: Verbindungssteg

- 10: Farbfläche
- 11: Farbelement grün
- 12: Farbelement rot
- 13: Farbelement blau
- 14: Elektrode

- 21a, b: L-förmige Ausnehmung
- 22a, b: L-förmige Ausnehmung
- 23a, b: L-förmige Ausnehmung
- 24a, b: L-förmige Ausnehmung

- 30: Trägerwand

## Patentansprüche

1. Hochauflösendes Display, bestehend aus einer Membran, in welche Drehklappen eingearbeitet sind, die jeweils aus zwei beidseitig der Drehachse befindlichen Flügeln bestehen und mit der Membran über mit dieser einstückige, in der Drehachse gelegene Torsionsstege verbunden sind, und einer elektronischen Ansteuereinrichtung zum Drehen der einzelnen Drehklappen, dadurch gekennzeichnet, daß die Flügel (5, 6) der Drehklappen (2) mit den Torsionsstegen (3 bzw. 4) über mittig angeordnete, gegenüber der Klappenhöhe verjüngte Verbindungsstege (7) verbunden sind und die Torsionsstege (3 bzw. 4) zwischen den Flügeln (5, 6) gelegen sind und diese beidseitig nur um den Abstand zwischen den benachbarten Rändern der Flügel (5, 6) und der Membranaussparung überragen.

2. Vorrichtung nach Anspruch 1, dadurch gekennzeichnet, daß der Abstand zwischen zwei benachbarten Drehklappen (2) kleiner als die Breite eines Torsionsstegs (3 bzw. 4) ist.

3. Vorrichtung nach Anspruch 1 oder 2, dadurch gekennzeichnet, daß die beiden Torsionsstege (3, 4) symmetrisch zur Mittelachse der Drehklappe (2) angeordnet sind.

4. Vorrichtung nach Anspruch 1 oder 2, dadurch gekennzeichnet, daß die Torsionsstege (3', 4') seitlich versetzt zur Mittelachse der Drehklappe (2') angeordnet sind.

5. Vorrichtung nach einem der vorhergehenden Ansprüche, dadurch gekennzeichnet, daß die Membran (1) aus 1 µm starkem Silizium besteht und die Drehklappen (2) in die Membran (1) durch reaktives Ionenätzen eingearbeitet sind.

6. Vorrichtung nach einem der vorhergehenden Ansprüche, dadurch gekennzeichnet, daß die Drehklappen (2) und die Membran (1) nicht-reflektierend schwarz ausgebildet sind.

7. Vorrichtung nach einem der vorhergehenden Ansprüche, dadurch gekennzeichnet, daß hinter der Membran (1) mit den Drehklappen (2) eine einfarbige weiße Farbfläche (10) angebracht ist.

8. Vorrichtung nach einem der Ansprüche 1 bis 5, dadurch gekennzeichnet, daß die Membran (1) und die Drehklappen (2) weiß und die dahinterliegende Farbfläche (10) schwarz ausgeführt sind.

9. Vorrichtung nach einem der Ansprüche 1 bis 6, dadurch gekennzeichnet, daß hinter der Membran (1) eine reflektierende Farbfläche (10) angebracht ist, die aus einem Muster von roten, grünen und blauen Farbelementen (11, 12, 13) besteht.

10. Vorrichtung nach einem der Ansprüche 1 bis 5, dadurch gekennzeichnet, daß die hinter der Membran angeordnete Farbfläche (10) nicht-reflektierend schwarz ausgebildet ist und die Grundfarben Grün, Rot und Blau auf den Drehklappen (2) aufgebracht sind.

11. Vorrichtung nach Anspruch 9, dadurch gekennzeichnet, daß die Farbfläche (10) aus einer lumineszierenden Farbschicht besteht.

12. Vorrichtung nach Anspruch 9, dadurch gekennzeichnet, daß die Farbfläche (10) als halbtransparentes Filter ausgebildet ist.

13. Vorrichtung nach Anspruch 12, dadurch gekennzeichnet, daß das halbtransparente Filter mit einer Hintergrundbeleuchtung, z.B. durch Elektroluminiszenz, beleuchtet wird.

14. Vorrichtung nach Anspruch 12, dadurch gekennzeichnet, daß die Hintergrundbeleuchtung vor den Drehklappen (2) angeordnet ist und die elektrisch steuerbaren Drehklappen das von der Hintergrundbeleuchtung kommende Licht selektiv auf die als Displayfläche dienende Farbläche (10) durchtreten lassen.

15. Vorrichtung nach einem der vorhergehenden Ansprüche, dadurch gekennzeichnet, daß die Membran (1) mit den Drehklappen (2) als steuerbare Bildmaske, Blende, steuerbarer Verschluß oder als steuerbares Spatialfilter für transmittierende Strahlung im sichtbaren bzw. unsichtbaren Wellenbereich verwendet wird.

16. Vorrichtung nach einem der vorhergehenden Ansprüche, dadurch gekennzeichnet, daß die Membran (1) von einem dichten Mantel umgeben ist, in dem sich Gase bzw. Flüssigkeiten zur Dämpfung der Torsionsbewegung der Drehklappen (2) befinden.

17. Vorrichtung nach einem der vorhergehenden Ansprüche, dadurch gekennzeichnet, daß die Zeitkonstante der elektronischen Ansteuerung zur Anpassung an die Trägheit der Drehklappen (2) veränderbar ist.

18. Vorrichtung nach einem der vorhergehenden Ansprüche, dadurch gekennzeichnet, daß in der Trägerwand (30) Elektroden von Dünnschichttransistoren eingelassen sind, die einzeln ansteuerbar sind und mit deren Hilfe die Drehklappen geöffnet und wieder geschlossen werden können.

## Claims

1. A high-resolution display, consisting of a membrane into which are incorporated pivoting flaps which in each case consist of two wings located on either side of the axis of rotation and are connected to the membrane via torsion bars in one piece therewith and located in the axis of rotation, and an electronic control device to rotate the individual pivoting flaps,
**characterised in that** the wings (5, 6) of the pivoting flaps (2) are connected to the torsion bars (3 and 4 respectively) via centrally disposed connecting rods (7) tapered in relation to the flap height and the torsion bars (3 and 4 respectively) are laid between the wings (5, 6) and these protrude on both sides only by the distance between the adjacent edges of the wings (5,6) and of the membrane recess.

2. A device according to Claim 1,
**characterised in that** the distance between two adjacent pivoting flaps (2) is less than the width of a torsion bar (3and 4 respectively).

3. A device according to Claim 1 or 2,
**characterised in that** the two torsion bars (3, 4) are disposed symmetrically to the centre axis of the pivoting flap (2).

4. A device according to Claim 1 or 2,
**characterised in that** the torsion bars (3', 4') are disposed laterally displaced to the centre axis of the pivoting flap (2').

5. A device according to one of the preceding Claims,
**characterised in that** the membrane (1) is made of silicon 1µm thick and the pivoting flaps (2) are incorporated in the membrane (1) by reactive ion etching.

6. A device according to one of the preceding Claims,
**characterised in that** the pivoting flaps (2) and the membrane (1) are non-reflecting black.

7. A device according to one of the preceding Claims,
**characterised in that** a single-coloured white coloured surface (10) is mounted behind the membrane (1) with the pivoting flaps (2).

8. A device according to one of Claims 1 to 5,
**characterised in that** the membrane (1) and the pivoting flaps (2) are white and the coloured surface (10) lying behind it is black.

9. A device according to one of Claims 1 to 6,
**characterised in that** a reflective coloured surface (10), which consists of a pattern of red, green and blue coloured elements (11, 12, 13) is mounted behind the membrane (1).

10. A device according to one of Claims 1 to 5,
**characterised in that** the coloured surface (10) disposed behind the membrane is non-reflecting black and the primary colours green, red and blue are applied to the pivoting flaps (2).

11. A device according to Claim 9,
**characterised in that** the coloured surface (10) consists of a luminescent coloured layer.

12. A device according to Claim 9,
**characterised in that** the coloured surface (10) is constructed as a semi-transparent filter.

13. A device according to Claim 12,
**characterised in that** the semi-transparent filter is illuminated with a back-lighting, e.g. electroluminescence.

14. A device according to Claim 12,
**characterised in that** the back-lighting is disposed in front of the pivoting flaps (2) and the electrically controllable pivoting flaps allow the light coming from the back-lighting to pass selectively onto the coloured surface serving as the display surface.

15. A device according to one of the preceding Claims,
**characterised in that** the membrane (1) with the pivoting flaps (2) is used as a controllable picture mask, diaphragm, controllable seal or as a controllable spatial filter for transmitting radiation in the visible or invisible wave range.

16. A device according to one of the preceding Claims,
**characterised in that** the membrane (1) is surrounded by a tight casing in which gases or liquids respectively for damping the torsional movement of the pivoting flaps (2) are located.

17. A device according to one of the preceding Claims,
**characterised in that** the time constant of the electronic control can be varied to adapt to the inertia of the pivoting flaps (2).

18. A device according to one of the preceding Claims,
**characterised in that** electrodes of thin-film transistors, which can be individually controlled and by means of which the pivoting flaps can be opened and closed again, are embedded in the carrier wall (30).

## Revendications

1. Ecran de visualisation à haute résolution, se composant d'une membrane, dans laquelle sont insérés des volets rotatifs, qui sont constitués de deux ailes se trouvant des deux côtés de l'axe de rotation et sont liés à la membrane par des barrettes de torsion en une pièce avec celle-ci, posées sur l'axe de rotation et d'un dispositif d'excitation électronique pour faire tourner les volets rotatifs individuels,
caractérisé en ce que
les ailes (5, 6) des volets rotatifs (2) sont reliées aux barrettes de torsion (3 ou 4) par des entretoises de liaison (7) réduites par rapport à la hauteur des volets, placées au centre et les barrettes de torsion (3 ou 4) sont placées entre les volets (5, 6) et celles-ci dépassent en hauteur des deux côtés seulement de la distance entre les bords voisins des ailes (5, 6) et l'évidement de la membrane.

2. Dispositif selon la revendication 1,
caractérisé en ce que
la distance entre deux volets rotatifs voisins (2) est plus petite que la largeur d'une barrette de torsion (3 ou 4).

3. Dispositif selon la revendication 1 ou 2,
caractérisé en ce que
les deux barrettes de torsion (3, 4) sont disposées symétriquement par rapport à l'axe médian du volet rotatif (2).

4. Dispositif selon la revendication 1 ou 2,
caractérisé en ce que
les barrettes de torsion (3', 4') sont disposées décalées latéralement par rapport à l'axe central du volet rotatif (2').

5. Dispositif selon une des revendications précédentes,
caractérisé en ce que
la membrane (1) est composée de silicium d'épaisseur 1 µm et les volets rotatifs (2) sont formés dans la membrane (1) par attaque chimique ionique réactive.

6. Dispositif selon une des revendications précédentes,
caractérisé en ce que
les volets rotatifs (2) et la membrane (1) sont réalisé non réfléchissants en noir.

7. Dispositif selon une des revendications précédentes,
caractérisé en ce que
derrière la membrane (1) est appliquée avec les volets rotatifs (2) une surface colorée (10) d'une seule couleur blanche.

8. Dispositif selon une des revendications 1 à 5,
caractérisé en ce que
la membrane (1) et les volets rotatifs (2) sont réalisés en blanc et la surface de couleur (10) située derrière est réalisée en noir.

9. Dispositif selon une des revendications 1 à 6,
caractérisé en ce que
derrière la membrane (1) est appliquée une surface colorée (10) réfléchissante, qui se compose d'un modèle d'éléments de couleur rouges, verts et bleus (11, 12, 13).

10. Dispositif selon une des revendications 1 à 5,
caractérisé en ce que
la surface de couleur (10) disposée derrière la membrane est réalisée non réfléchissante noire et les couleurs de base vert, rouge et bleu sont appliquées sur les volets rotatifs (2).

11. Dispositif selon la revendication 9,
caractérisé en ce que
la surface de couleur (10) est composée d'une couche colorée luminescente.

12. Dispositif selon la revendication 9,
caractérisé en ce que
la surface de couleur (10) est réalisée en filtre semi-transparent.

13. Dispositif selon la revendication 12,
caractérisé en ce que
le filtre semi-transparent est éclairé par un éclairage d'arrière plan, par exemple par électro-luminescence.

14. Dispositif selon la revendication 12,
caractérisé en ce que
l'éclairage d'arrière plan est disposé en avant des volets rotatifs (2) et les volets rotatifs réglables électriquement laissent pénétrer la lumière venant de l'arrière plan de manière sélective sur la surface de couleur (10) servant de surface d'écran de visualisation.

15. Dispositif selon une des revendications précédentes,
caractérisé en ce que
la membrane (1) avec les volets rotatifs (2) est utilisée comme cache réglable, diaphragme, obturateur réglable ou comme filtre spatial réglable pour rayonnement transmettant dans le domaine d'ondes visibles et invisibles.

16. Dispositif selon une des revendications précédentes,
caractérisé en ce que
la membrane (1) est entourée d'une enveloppe étanche, dans laquelle se trouvent des gaz ou des liquides pour l'amortissement du mouvement de torsion des volets rotatifs (2).

17. Dispositif selon une des revendications précédentes,
caractérisé en ce que
la constante de temps de l'excitation électronique est modifiable pour son adaptation à l'inertie des volets rotatifs (2).

18. Dispositif selon une des revendications précédentes,
caractérisé en ce que
dans la paroi porteuse (30) sont insérées des électrodes de transistor à couche mince, qui sont excitables séparément et à l'aide desquelles les volets rotatifs peuvent être ouverts et à nouveau fermés.
